# EUROPÄISCHE PATENTSCHRIFT

(11) **EP 0 365 905 B1**
(45) Veröffentlichungstag und Bekanntmachung des Hinweises auf die Patenterteilung: **11.05.1994**
(21) Anmeldenummer: 89118712.2
(22) Anmeldetag: 09.10.1989
(51) Int. Cl.: H04Q 11/04, H04Q 3/545

(54) **Verfahren zum Betrieb zentralgesteuerter Fermeldevermittlungsanlagen**
Process for controlling centrally controlled communication exchanges
Procédé pour contrôler centralement des centraux de télécommunication

(30) Priorität: 28.10.1988 DE 3836800; 21.02.1989 DE 3905296
(43) Veröffentlichungstag der Anmeldung: 02.05.1990
(73) Patentinhaber: SIEMENS AKTIENGESELLSCHAFT, 80333 München (DE)
(72) Erfinder: Schlag, Richard, D-8000 München 60 (DE); Schröder, Franz, D-8000 München 70 (DE)

(56) Entgegenhaltungen:
- EP-A- 0 125 602
- CONFERENCE RECORD , IEEE GLOBAL TELECOMMUNICATIONS CONFERENCE, 2-5 DEZ. 1985, BAND 2, SEITEN 899-902, NEW ORLEANS; US; G. CHAHIL: 'System Initialization in a Distributed Digital Switch'
- TELCOM REPORT. Bd. 5, Nr. 4, 1982, MUNCHEN, DE, Seiten 262-266; K. FRIESER ET AL.: 'Digital Concentrators in the EWSD Telephone Switching System'

## Beschreibung

Die Erfindung betrifft ein Verfahren gemäß dem Oberbegriff des Patentanspruchs 1.

Eine Fernmeldevermittlungsanlage der Art, mit der Erfindung in Zusammenhang steht, ist bereits durch die Zeitschrift "telcom report" Vol. 5 (1982), No. 4 (englischsprachige Ausgabe) Seite 262 ff bekannt. In derselben Zeitschrift, und zwar im Beiheft 1981 der deutschsprachigen Ausgabe, insbesondere Seiten 7 ff, 19 ff und 49 ff sind im gegebenen Zusammenhang weitere Einzelheiten erläutert. Auf Seite 19 ff sind u.a. die Teilkoppelfelder der peripheren Anschlußgruppen dargestellt und beschrieben (LIU). Innenseitig sind sie mit dem gedoppelten zentralen Koppelfeld ("Koppelnetz") verbunden und außenseitig über Anschlußeinheiten (LTU/DIU) mit Analogleitungen bzw. -kanälen von Digitalübertragungssystemen. In der genannten englischsprachigen Ausgabe sind Konzentratoren beschrieben. Diese sind in ihrer jeweils übergeordneten Vermittlungsstelle an die Teilkoppelfelder wenigstens zweier Anschlußgruppen angeschlossen. Die Verbindungsherstellungsvorgänge werden über die eine oder über die andere Anschlußgruppe abgewickelt. In der genannten deutschsprachigen Ausgabe der obigen Zeitschrift sind auf Seite 8 die über das gedoppelte Koppelfeld in betriebsbereitem Zustand ständig durchgeschalteten Steuerkanäle beschrieben. In diesem bekannten Falle sind das zentrale Koppelfeld und der zentrale Prozessor also aus Sicherheitsgründen gedoppelt. Diese Doppelung fällt im Blick auf die Gesamtheit einer derartigen Vermittlungsstelle aufwandsmäßig nicht besodners ins Gewicht, weil sie nur wenige zentrale Bestandteile betrifft. Die pripheren Anschlußgruppen und die zu ihnen gehörenden Bestandteile, wie zum Beispiel die zentrale Steuereinrichtung und das Teilkoppelfeld, sind in größerer Anzahl und folglich in vergleichsweise relativ großem Umfang vorhanden und sind deshalb nicht gedoppelt. Bei einem Ausfall einer Anschlußgruppe (zum Beispiel ihres Teilkoppelfeldes oder ihrer dezentralen Steuereinrichtung oder ihrer Stromversorgung) ist hiervon ein relativ so kleiner Teil der Gesamtheit der angeschlossenen Teilnehmerleitungen, Konzentratorhauptleitungen sowie Verbindungsleitungen betroffen, daß eine vorübergehende Betriebsunterbrechung, die sich also auf diese beschränkt, in Vermittlungsanlagen der beschriebenen bekannten Art hingenommen wird.

Bei den genannten Steuerkanälen handelt es sich um die eingangs genannten Datenverbindungen, die für den sowohl der Verarbeitung von in den Anschlußgruppen eintreffenden Wahlinformationen im zentralen Prozessor, als auch der Übertragung von Programm- und Vermittlungs-Software vom zentralen Prozessor an die dezentralen Steuereinrichtungen dienenden Datenaustausch vorhanden sein müssen, welcher also zwischen den dezentralen Steuereinrichtungen einerseits und dem zentralen Prozessor andererseits abgewickelt wird, und die hierfür in betriebsbereitem Zustand gebracht bzw. ständig in ihm gehalten werden. Auf Seite 25 der deutschsprachigen Ausgabe der erwähnten Zeitschrift wird detailliert beschrieben, wie zum Start des Vermittlungsbetriebes die dezentralen Steuereinrichtungen über diese Steuerkanäle mit Programmen und festen Daten vom zentralen Prozessor geladen werden. Solche Ladeprozeduren sind für jede der dezentralen Steuereinrichtungen durchzuführen. Die Durchführung dieser Ladeprozeduren ist nicht nur im Einschaltefall (Start des Vermittlungsbetriebes), sondern auch im Ersatzschaltefall erforderlich, wenn also der mit einem der beiden parallelen Koppelfelder und einem der beiden zentralen Prozessoren, das heißt dem betreffenden zentralen Koppelfeld zugeordneten zentralen Prozessor, laufende Vermittlungsbetrieb anstatt mit diesem zentralen Koppelfeld und diesem zentralen Prozessor mit dem jeweils anderen zentralen Koppelfeld und dem jeweils anderen zentralen Prozessor fortgeführt wird.

Solche Ersatzschaltefälle werden insbesondere bei Eintreten von Störungen oder Auftreten von Fehlern, also meistens unvorhersehbar erforderlich. Fehler und Störungen können so gravierend sein, daß eine unverzügliche Ersatzschaltung notwendig ist. Häufig jedoch betreffen solche Fehler und Störungen nur Teile der gesamten Vermittlungsanlage, zum Beispiel nur einen Teil des zentralen Koppelfeldes, oder nur bestimmte Funktionen in demselben oder im zentralen Prozessor, oder sie treten sporadisch auf.

In solchen Fällen, das heißt den meisten notwendig werdenden Ersatzschaltefällen, läßt sich die betreffende Ersatzschaltmaßnahme auch noch kurzzeitig hinausschieben. Da die mit einer Ersatzschaltung verbundenen, oben erwähnten Ladevorgänge größere Datenmengen umfassen und pro dezentrale Steuereinrichtung durchzuführen sind, sind sie relativ zeitaufwendig. Da diese Ladevorgänge vollständig abgewickelt sein müssen, bevor mit dem Vermittlungsbetrieb selbst begonnen werden kann oder wieder begonnen werden kann, haben Ersatzschaltemaßnahmen mitunter eine unvorteilhaft lange Betriebsunterbrechung zur Folge.

Darüber hinaus gibt es auch Betriebssituationen, in denen die Programm-Software geändert werden muß, insbesondere in den dezentralen Steuereinrichtungen. Das bedeutet, daß sie erneuert werden muß. Ebenso gibt es auch Betriebsfälle, in denen Betriebsdaten geändert werden müssen, die in den dezentralen Steuereinrichtungen gespeichert sind, oder auch in Konzentratorprozessoren der Konzentratoren. Solche Betriebsdaten können Teilnehmeranschlußdaten sein und Angaben darüber enthalten, welche betriebstechnischen Berechtigungen die verschiedenen Teilnehmer haben, ferner ihre Teilnehmeranschlußlagedaten und dergleichen. So gibt es eine Fülle von Betriebssituationen, in denen es notwendig wird, daß Ladeprozeduren abgewickelt werden für die in den Anschlußgruppen vorhandenen dezentralen Steuereinrichtungen, gegebenenfalls auch für die genannten Konzentratorprozessoren.

Für die Erfindung besteht deshalb die Aufgabe,
bei einer Fernsprechvermittlungsanlage der angegebenen Art die Betriebsbedingungen für Ersatzschaltemaßnahmen und für Ladeprozeduren der angegebenen Art günstiger zu gestalten und unvorteilhaft lange Betriebsunterbrechungen in diesem Zusammenhang zu vermeiden. Darüber hinaus soll erreicht werden, daß bei Ersatzschaltemaßnahmen und Ladeprozeduren der beschriebenen Art für die angeschlossenen Konzentratoren eine möglichst kontinuierlich fortgeführte Betriebsbereitschaft aufrechterhalten wird.

Die Erfindung löst die ihr gestellte Aufgabe durch die im Kennzeichen des Patentanspruchs 1 angegebenen Merkmale.

Durch die Erfindung wird erreicht, daß bei Wechsel von Programmen, Anschluß- und Anlagendaten wowie von zentralen Prozessoren und dergleichen ein Totalausfall einer Vermittlungsanlage im Zusammenhang mit den dabei erforderlich werdenden Ladeprozeduren gänzlich vermieden wird; ebenso wird vermieden, daß durchgeschaltete sowie im Aufbau befindliche Verbindungen dabei abgebrochen werden. Vielmehr kann der Vermittlungsbetrieb über einen Wechsel obiger Art lückenlos weitergeführt werden und zwar lückenlos für Verbiondungen, die aufgebaut sind (von Teilnehmer zu Teilnehmer bereits durchgeschaltet, Kommunikation läuft bereits) durchgeschaltet werden (Verbindungen befinden sich z. Zt. im Aufbaustadium) oder durchgeschaltet werden sollen (Teilnehmer hebt Hörer ab und will mit dem Wählen beginnen, erwartet Wählton und erwartet eine Verbindung zu einem freien Wahlkennzeichenempfänger).

Eine Weiterbildung der Erfindung dient dem Zweck, daß der andere Prozessor, der also jeweils die betriebsführende Funktion hinsichtlich des Vermittlungsbetriebs übernommen hat, entlastet wird und besteht darin, daß der eine Prozessor, der zunächst noch betriebsführend geblieben ist, nach erfolgter Ladung der Steuereinrichtungen der Anschlußgruppen der zweiten Kategorie durch den anderen Prozessor und nach Übernahme der bwezüglich des Vermittlungsbetriebes betriebsführenden Prozessorfunktion durch den anderen Prozessor und nach einer im Zusammenhang mit dieser Übernahme erfolgten Sperrung der Steuereinrichtungen der Anschlußgruppen der ersten Kategorie gegenüber Verbindungsherstellungsdaten die Ladung der genannten neuen Informationen und Daten von dem anderen Prozessor erhält, daß danach der eine Prozessor die Steuereinrichtungen der Anschlußgruppen der ersten Kategorie mit diesen Informationen und Daten lädt und darauf die Datenverbindungen zu diesen Steuereinrichtungen unterbricht, und daß danach der andere Prozessor Datenverbindungen zu diesen Steuereinrichtungen durchschaltet und letztere für Verbindungsherstellungsdaten gegenüber den angeschlossenen Konzentratoren wieder entsperrt.

Hierdurch wird zusätzlich die Arbeitsbelastung für den jeweils anderen Prozessor, also denjenigen, der jeweils die betriebsführende Funktion hinsichtlich des Vermittlungsbetriebes übernommen hat, herabgesetzt. Er muß nicht die Ladung mit Informationen und Daten an den Steuereinrichtungen aller derjenigen Anschlußgruppen durchführen, die der ersten Kategorie angehören, sondern er nimmt eine solche Ladung nur gegenüber dem einen Prozessor, d.h. eine Übertragung der genannten neuen Informationen und Daten an diesen Prozessor, vor, der also anfangs noch weiter der betriebsführende Prozessor geblieben war; und dieser nimmt dann seinerseits die Vorgänge der Ladung an allen denjenigen Steuereinrichtungen vor, die zu den Anschlußgruppen der ersten Kategorie gehören. Darüber hinaus ergibt sich ein weiterer Vorteil, und zwar auf dem Hintergrund weiterer Zusammenhänge, die anschließend erläutert werden. In entsprechenden Speichern der zentralen Prozessoren sind die Steuereinrichtungen der Anschlußgruppen als mit dem jeweiligen Prozessor verbunden und für ihn datenaustauschmäßig zugänglich speicherungstechnisch vermerkt, oder - im gegeteiligen Falle - nicht vermerkt. In dieser Weise in einem Prozessor nicht vermerkte Steuereinrichtungen sind also für den betreffenden Prozessor momentan praktisch nicht zugänglich, was auch auch den Vorgang der Ladung mit den neuen Informationen und Daten betrifft. Ferner bestehen hinsichtlich der Ladung der Steuereinrichtungen mit den neuen Informationen und Daten für die Prozessoren grundsätzlich zwei Möglichkeiten. Ein Prozessor kann die in ihm als zugänglich vermerkten Steuereinrichtungen entweder einzeln nacheinander ansteuern, um ihnen einzeln nacheinander die neuen Informationen und Daten zu übertragen, oder er kann sämtliche in ihm als zugänglich vermerkten Steuereinrichtungen gleichzeitig ansteuern und diese neuen Informationen und Daten gleichzeitig für alle diese Steuereinrichtungen aussenden, die dann in diesen Steuereinrichtungen also auch gleichzeitig empfangen werden. Diese Zusammenhänge sind nun im Hinblick auf die weiter oben angesprochene Ladung der Steuereinrichtungen der ersten Kategorie von besonderer Bedeutung. Wird eine solche Ladung durch den genannten anderen Prozessor durchgeführt, so müssen hierzu in diesem zusätzlich zu den Steuereinrichtungen der Anschlußgruppen der zweiten Kategorie auch die Steuereinrichtungen der Anschlußgruppen der ersten Kategorie nach einer Durchschaltung der genannten Datenverbindungen zu diesen Steuereinrichtungen der ersten Kategorie als zugänglich u.a. für eine Ladung mit den neuen Informationen und Daten speicherungstechnisch vermerkt werden. Hierbei führt also dieser andere Prozessor die Vorgänge der Ladung mit neuen Informationen und Daten durch, und zwar notwendigerweise - was von besonderer Bedeutung ist - einzeln nacheinander an den Steuereinrichtungen der Anschlußgruppen der ersten Kategorie; denn das zuvor beschriebene gleichzeitige Laden für sämtliche in dem anderen Prozessor speicherungstechnisch als zugänglich vermerkte Steuereinrichtungen ist in diesem Falle nicht durchführbar, weil ja auch die Steuereinrichtungen der Anschlußgruppen der zweiten Kategorie in diesem anderen Prozessor speicherungstechnisch als zugänglich vermerkt sind. Gemäß der oben angegebenen Weiterbildung kann jedoch das weiter oben beschriebene Verfahren gleichzeitig durchgeführter Ladevorgänge zur Anwendung kommen, wobei also der genannte eine Prozessor sämtliche speicherungstechnisch in ihm als zugänglich vermerkten Steuereinrichtungen, nämlich die Steuereinrichtungen der Anschlußgruppen der ersten Kategorie, (und nur diese!), zugleich ansteuert und gleichzeitig an dessen Steuereinrichtungen die neuen Informationen und Daten aussendet, die also in diesen Steuereinrichtungen gleichzeitig empfangen werden können. Dadurch läßt sich die Gesamtheit der Vorgänge der Ladung der Steuereinrichtungen der ersten Kategorie mit den neuen Informationen und Daten ganz wesentlich verkürzen.

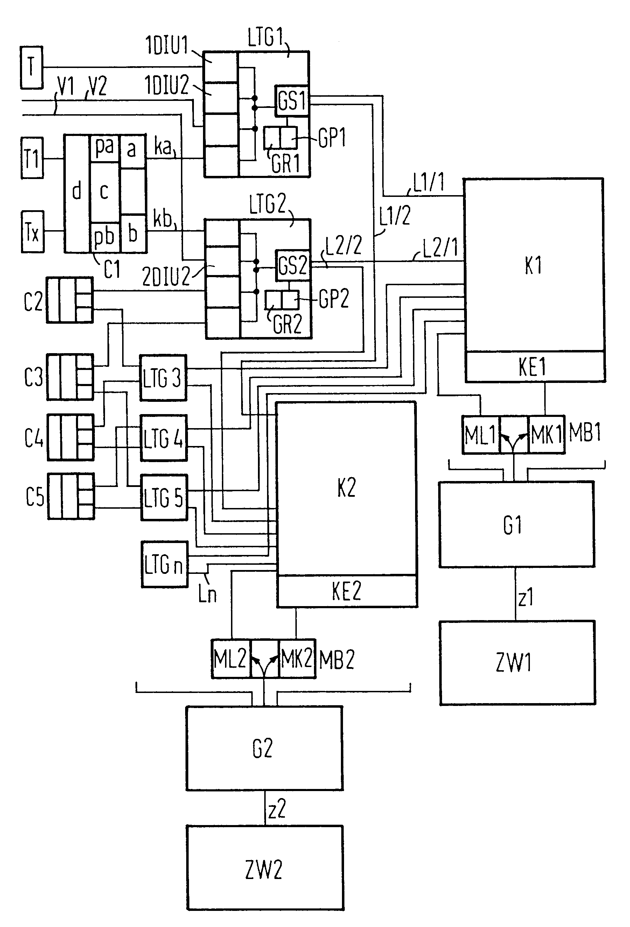

In der Zeichnung ist ein Ausführungsbeispiel einer Fernsprechvermittlungsanlage, zu deren Betrieb das erfindungsgemäße Verfahren dient, nur in wesentlich zu ihrem Verständnis beitragenden Bestandteilen dargestellt, worauf dieselbe jedoch keineswegs beschränkt ist.

Es sind zwei zentrale Koppelfelder K1 und K2 mit ihren Einstelleinrichtungen KE1 und KE2 vorgesehen. Den Koppelfeldern sind zwei zentrale Prozessoren ZW1 und ZW2 zugeordnet. Zu diesen wiederum gehören Eingabe-Ausgabe-Steuerwerke G1 und G2, mit denen sie über zugeordnete Leitungssysteme z1 und z2 verbunden sind. Ferner ist eine größere Anzahl von Anschlußgruppen LTG1 bis LTGn vorgesehen. Die Anschlußgruppen stehen über Linkleitungen L1/1 bis Ln mit beiden Koppelfeldern in Verbindung. Jede Linkleitung umfaßt eine größere Anzahl von verbindungsindividuell belegbaren Leitungen bzw. Kanalpaaren. Diese Linkleitungen können realisiert sein in an sich bekannter Weise als PCM-Kanalsysteme. Die Koppelfelder mögen in Zeitmultiplextechnik aufgebaut sein und Raumkoppelstufen und Zeitkoppelstufen umfassen. Die zentralen Prozessoren ZW1 und ZW2 sind - wie bereits erwähnt wurde - parallel vorgesehen. Einer von ihnen befindet sich immer im betriebsführenden Zustand. Dieser ist über Datenverbindungen, die er jeweils über sein Koppelfeld durchschaltet,
mit jeder der Anschlußgruppen verbunden und zwar jeweils mit der dezentralen Steuereinrichtung in jeder der Anschlußgruppen. Die Betriebsweise dieser Datenverbindungen ist bereits ausführlich in der deutschen Offenlegungsschrift 3 106 903 (VPA 81 P 6209) beschrieben. In der deutschen Offenlegungsschrift 3 128 365 (VPA 81 P 6257) ist bereits ausführlich die Abwicklung des Datenverkehrs zwischen zentralem Prozessor einerseits und den dezentralen Steuereinrichtungen der Anschlußgruppen andererseits beschrieben. Diese Datenverbindungen verlaufen über Pufferspeicher MB1 bzw. MB2. Diese Pufferspeicher enthalten jeweils einen Speicherteil ML1 bzw. ML2 für Daten und einen Speicherteil MK1 bzw. MK2 für KoppelfeldEinstellinformationen. Aufbau und Arbeitsweise dieser Pufferspeicher sind bereits ausführlich in den deutschen Offenlegungsschriften 31 06 868 (VPA 81P6207) und 31 06 879 (VPA 81P6208) beschrieben. Es ist ferner auch noch auf die deutsche Offenlegungsschrift 36 09 889 (VPA 86P1187) hinzuweisen, in der die Zusammenarbeit eines in den an deren Offenlegungsschriften beschriebenen Fernsprechvermittlungssystems in Zeitmultiplex-Technik beschrieben wird in Zusammenhang mit einer Zusammenarbeit mit Konzentratoren. Auch hierin ist bereits dargestellt und beschrieben, daß ein Konzentrator über zwei Leitungssysteme mit zwei verschiedenen Anschlußgruppen verbunden ist, das heißt außenseitig mit ihren Teilkoppelfeldern. Außerdem ist der Aufbau sowie die Funktionsweise eines Fernsprechvermittlungssystems der eingangs genannten bekannten Art bereits ausführlich in der oben erwähnten Zeitschrift "telcom report" dargestellt und beschrieben.

In der Zeichnung ist also eine zentralgesteuerte Fernmeldevermittlungsanlage dargestellt, die in PCM-Zeitmultiplextechnik aufgebaut ist und arbeitet. Sie dient als Fernsprechvermittlungsanlage. Ein der Verbindungsdurchschaltung dienendes zentrales Koppelfeld samt einem unter anderem dessen Steuerung sowie einer hierfür erforderlichen Schaltkennzeichenverarbeitung dienenden programmgesteuerten zentralen Prozessor ist zur Ersatzschaltemöglichkeit zweifach vorgesehen. Ferner ist eine Mehrzahl von dezentralen Anschlußgruppen LTG1 bis LTGn vorgesehen. Jede Anschlußgruppe enthält ein Teilkoppelfeld, zum Beispiel GS1 zum außenseitigen Anschluß von Verbindungsleitungen V1/V2 und von Teilnehmerleitungen, an die Teilnehmerstationen T, T1, Tx (letztere beide angeschlossen an einen Konzentrator C1 der seinerseits an die Anschlußgruppen LTG1 und LTG2 angeschlossen ist) und weitere angeschlossen sind.

Jede der Anschlußgruppen, zum Beispiel LTG1 enthält unter anderem eine dezentrale programmierbare Steuereinrichtung, zum Beispiel GP1. Jeder derselben ist ein Speicher, zum Beispiel GR1, zugeordnet. Dieser Speicher dient zur Speicherung von Programminformationen, sowie zur Speicherung von Betriebsdaten. Hierbei möge es sich z.B. um Daten über die Teilnehmerrufnummer-Teilnehmeranschlußlage-Zuordnung handeln, ferner über bestimmte Betriebsweisen, zu denen jeweils ein Teilnehmer berechtigt ist und dergleichen.

Die dezentralen programmierbaren Steuereinrichtungen, zum Beispiel LTG1, dienen unter anderem auch zur Schaltkennzeichenaufnahme von den genannten Teilnehmerleitungen und Verbindungsleitungen, ferner zur Schaltkennzeichenvorverarbeitung und -weiterleitung an den zentralen Prozessor in aufbereiteter Form. Außerdem dienen diese Steuereinrichtungen zur Schaltkennzeichenaussendung auf die genannten Leitungen, aufgrund von Steuerinformationen, die sie vom zentralen Prozessor erhalten.

Wie bereits ausgeführt wurde, ist in jeder der Anschlußgruppen, zum Beispiel LTG1, das jeweilige Teilkoppelfeld, zum Beispiel GS 1, innenseitig (in der Zeichnung auf der rechten Seite von GS1) über zwei Gruppen von Linkleitungen, zum Beispiel L1/1 und L1/2 an Koppelfeldanschlüsse einerseits des einen zentralen Koppelfeldes K1 und andererseits des anderen zentralen Koppelfeldes K2 angeschaltet. Ebenfalls wurden bereits die Datenverbindungen zwischen den zentralen Prozessoren einerseits und den dezentralen Steuereinrichtungen andererseits erwähnt. Diese Datenverbindungen dienen für den Datenaustausch im Sinne der zuvor erwähnten Schaltkennzeichenbehandlung, sowie für eine Übertragung von Programm- und Vermittlungs-Software. Diese Datenverbindungen sind pro Steuereinrichtung vom jeweiligen Prozessor über das ihm zugeordnete Koppelfeld zu den dezentralen Steuereinrichtungen in betriebsbereiten Zustand gebracht, bzw. werden in ihm gehalten (vgl. die obigen Literaturstellen).

Es wurden bereits auch die Konzentratoren C1 bis C5 erwähnt. Jeder Konzentrator, zum Beispiel C1 weist u.a. zwei Konzentratorprozessoren, zum Beispiel a und b auf (vgl. DE-OS 3 609 889). Jeder Konzentrator ist über zwei Leitungssysteme, z.B. ka und kb, bzw. Kanalsysteme, mit zwei verschiedenen Anschlußgruppen, zum Beispiel LTG1 und LTG2 verbunden. In den Anschlußgruppen sind Anschlußeinrichtungen 1DIU1 und weitere zum Anschluß von Teilnehmerleitungen, Verbindungsleitungen, Konzentratorhauptleitungen und dergleichen vorgesehen. Die Anschlußeinrichtungen (vgl. DE-OS 3 607 903, in "telcom report" mit ,"DIU" und "GS" bezeichnet) sind wiederum mit dem Teilkoppelfeld innerhalb der betreffenden Anschlußgruppe verbunden. Die Konzentratoren, zum Beispiel C1, enthalten ferner eine Durchschalteeinrichtung, zum Beispiel c. Diese Durchschalteeinrichtung hat den Sinn und die Bedeutung eines konzentratorinternen Koppelfeldes, über das jeder Konzentratorteilnehmer, zum Beispiel T1, T, mit jeder der Konzentratorhauptleitungen verbunden werden kann. Ferner enthält jeder Konzentrator Teilnehmeranschlußeinrichtungen d (ähnlich wie DIU).

Es sind nun zwei Kategorien von Anschlußgruppen gebildet. Die Anschlußgruppen einer ersten Kategorie mögen alle diejenigen sein, welche in ihrer Bezeichnung (LTG1 bis LTGn) ungeradzahlige arabische Zahlen (z.B. LTG1, LTG3 usw.) aufweisen, während die Anschlußgruppen der zweiten Kategorie diejenigen sein mögen, welche in ihrer Bezeichnung geradzahlige arabische Zahlen (z.B. LTG2, LTG4 usw.) enthalten. Es sind also Anschlußgruppen zweier Kategorien gebildet. Diese Kategorieenbildung kann aber auch auf jede andere Weise vorgenommen sein. Jeder Konzentrator ist an eine Anschlußgruppe einer ersten Kategorie und an eine Anschlußgruppe einer zweiten Kategorie angeschlossen. Diese Anschlüsse mögen beliebig unter den Anschlußgruppen einerseits der einen Kategorie und andererseits der anderen Kategorie gewählt und festgelegt sein. Lediglich ist dabei gewährleistet, daß jeder Konzentrator an eine beliebige Anschlußgruppe einer ersten Kategorie und an eine beliebige Anschlußgruppe einer zweiten Kategorie angeschlossen ist.

Im hier beschriebenen Zusammenhang ist von besonderer Bedeutung die Ladung der Steuereinrichtungen mit Programminformationen und/ oder mit Betriebsdaten; letztere mögen zum Beispiel Daten über teilnehmerindividuelle Teilnehmeranschlußlage-Teilnehmerrufnummer-Zuordnungen sein, ferner Daten über teilnehmerindividuelle Berechtigungen zu bestimmten Betriebsweisen und dergleichen. Betriebsdaten, insbesondere die zuvor angesprochenen Anschlußdaten werden darüber hinaus auch in entsprechenden Speichern, zum Beispiel pa und pb der Konzentratorprozessoren geladen, die mit diesen Anschlußdaten in entsprechender Weise arbeiten.

Zur Ladung der Steuereinrichtungen mit Programminformationen und/oder mit Anschlußdaten und gegebenenfalls auch der Konzentratorprozessoren ebenfalls mit Anschlußdaten werden die oben erwähnten je zwei Anschaltungen pro Anschlußgruppe einzeln an die beiden Koppelfelder auf je nur eine Anschaltung beschränkt. Dabei bleiben die Anschlußgruppen der ersten Kategorie (z.B. LTG1, LTG3 usw.) mit den ersten der beiden Koppelfelder (z.B. K1) verbunden. Die über die Linkleitungen L1/1 bestehende Verbindung bleibt also aufrechterhalten, während die über die Linkleitungen L1/2 sowie L2/1 gegebenen Verbindungen unterbrochen werden. Indem die Anschlußgruppen der zweiten Kategorie an das zweite der beiden Koppelfelder angeschaltet verbleiben, bleibt also die über die Linkleitungen L2/2 bestehende Verbindung bestehen, während also auch die durch die Linkleitungen L2/1 gegebenen Verbindungen unterbrochen werden. Dies ist vorzugsweise so zu verstehen, daß die Verbindungen in physikalischem Sinne zwar bestehen bleiben, daß sie aber insoweit nicht mehr benutzt werden, indem z.B. nach Maßgabe der Software insoweit nicht mehr zugänglich sind.

Durch die zuvor beschriebenen Maßnahmen wird erreicht, daß die eine Hälfte der Anschlußgruppen über das eine Koppelfeld nur mit dem einen Prozessor in Verbindung steht, während die andere Hälfte der Anschlußgruppen über das andere Koppelfeld nur mit dem anderen Prozessor in Verbindung steht. Die weiteren Verbindungsherstellungsvorgänge werden nun mit Hilfe der der ersten Kategorie zugehörigen Anschlußgruppen abgewickelt, deren Steuereinrichtungen mit dem zur Zeit noch betriebsführenden ersten Prozessor (z.B. ZW1) in Verbindung stehen. Verbindungsherstellungsdaten für neue Verbindungen, die über einen Konzentrator aufgebaut werden, werden in diesem jeweils zu derjenigen der betreffenden beiden Anschlußgruppen, an die dieser Konzentrator angeschlossen ist, weitergeleitet, die mit dem zur Zeit noch betriebsführenden Prozessor verbunden ist. Wenn man davon ausgeht, daß Teilnehmerstationen überwiegend, bzw. grundsätzlich an Konzentratoren angeschlossen sind (also weniger oder überhaupt nicht an Anschußgruppen direkt), ergibt sich nur eine geringe bzw. sogar gar keine Einschränkung der Betriebsbereitschaft für die betreffenden Teilnehmer.

Während der betriebsführende Prozessor weiterhin für die Vorgänge der Verbindungsherstellung über die Anschlußgruppen der einen Kategorie zur Verfügung steht, wickelt der jeweils andere Prozessor die Vorgänge der Ladung mit den Steuereinrichtungen der der anderen Kategorie zugehörigen Anschlußgruppen ab. Z.B. sei der gerade betriebsführende Prozessor der Prozessor ZW1 und die Verbindungsherstellung werde über dessen Koppelfeld K1 abgewickelt; es wikkeln dann sämtliche Konzentratoren, z.B. C1, ihre Verbindungsherstellung über die Anschlußgruppen der ersten Kategorie, z.B.LTG1, und jeweils über das betreffende Leitungssystem, z.B. ka, und über dieses Koppelfeld ab. Währenddessen tritt der andere Prozessor, z.B. ZW2, über sein Koppelfeld K2 mit den Anschlußgruppen der zweiten Kategorie, z.B. LTG2, in Verbindung und wickelt mit diesen Anschlußgruppen die Vorgänge der oben beschriebenen Ladung ab. Dabei erfolgt eine Ladung nicht nur der betreffenden Speicher innerhalb der Anschlußgruppen, sondern über die Anschlußgruppen, das heißt ihre Steuereinrichtungen, auch die Ladung der bereits genannten Daten in die betreffenden Speicher pa bzw. pb der Konzentratorprozessoren a bzw. b. Dies kann geschehen auch während des laufenden Vermittlungsbetriebes des betreffenden Konzentrators. Während dieser also seine Vermittlungsvorgänge mit Hilfe des einen Konzentratorprozessors, z.B. a, abwickelt, kann über den anderen Konzentratorprozessor, z.B. b, der Vorgang der Ladung abgewickelt werden.

Aufgrund erfolgter Ladung der betreffenden Steuereinrichtungen bzw. ihrer entsprechenden Speicher durch den die Ladung durchführenden Prozessor werden die Steuereinrichtungen der betreffenden Anschlußgruppen durch den letztgenannten Prozessor gegenüber den Konzentratorprozessoren anschließend zugänglich gemacht für eine Übertragung von Verbindungsherstellungsdaten für neue Verbindungen. Im obigen Beschreibungsbeispiel war davon die Rede, daß die Ladung vom Prozessor ZW2 an den Steuereinrichtungen der Anschlußgruppen der zweiten Kategorie vorgenommen wird, zum Beispiel LTG2/GP2. Die Vorgänge der Ladung erstrecken sich nicht nur auf die Anschlußgruppen der zweiten Kategorie und ihre Speicher, zum Beispiel GR2, sondern auch auf die Konzentratorprozessoren, wie bereits ausgeführt wurde.

Sind nun also die beschriebenen Ladevorgänge durch den bis dahin nicht betriebsführenden Prozessor abgewickelt worden, so macht dieser danach die Steuereinrichtungen der Anschlußgruppen der zweiten Kategorie gegenüber den Konzentratorprozessoren zugänglich für eine Übertragung von Verbindungsherstellungsdaten für neue Verbindungen. Vorübergehend können dann die Konzentratoren bzw. ihre Konzentratorprozessoren neue Verbindungen über das eine zentrale Koppelfeld oder über das andere zentrale Koppelfeld mit Hilfe des einen zentralen Prozessors oder mit Hilfe des anderen zentralen Prozessors abwickeln. Nachdem die Ladevorgänge bei sämtlichen Steuereinrichtungen der Anschlußgruppen der zweiten Kategorie abgeschlossen sind, können sämtliche Konzentratoren ihre neu herzustellenden Verbindungen folglich auch über die Anschlußgruppen der zweiten Kategorie aufbauen.

Die Steuereinrichtungen der Anschlußgruppen der ersten Kategorie werden nun unzugänglich gemacht gegenüber Konzentratorprozessoren für Verbindungsherstellungsdaten für neue Verbindungen. Verbindungsherstellungsdaten für neue Verbindungen können solche für völlig neu beginnende Verbindungsherstellungsvorgänge und/oder aber auch solche für bereits im Aufbau befindliche Verbindungen sein, bei denen also der Verbindungsherstellungsvorgang bereits begonnen hat. - Das zuvor angesprochene Unzugänglich-Machen geschieht durch den ursprünglich betriebsführenden Prozessor über die Steuereinrichtungen der Anschlußgruppen der ersten Kategorie. Etwas danach nimmt dieser Prozessor die Anschlußgruppen der ersten Kategorie außer Betrieb.

Der Prozessor, der die Ladung zunächst an den Steuereinrichtungen der Anschlußgruppen der zweiten Kategorie durchgeführt hat, veranlaßt danach auch Ladeprozeduren in entsprechender Weise zur Ladung der betreffenden Speicher der Steuereinrichtungen der Anschlußgruppen der ersten Kategorie. Hierzu kann es gemäß einer Ausführungsversion vorgesehen werden, daß dieser Prozessor über die betreffenden Datenverbindungen mit den Steuereinrichtungen dieser Anschlußgruppen in bekannter Weise in Verbindung tritt. Wenn dann auch diese Steuereinrichtungen die Ladung erhalten haben, macht der zweite Prozessor, der die Ladung vorgenommen hat, die Steuereinrichtungen der Anschlußgruppen der ersten Kategorie auch wieder zugänglich gegenüber den angeschlossenen Konzentratoren für Verbindungsherstellungsdaten für neue Verbindungen. Der zweite Prozessor, der die Vorgänge der Ladung durchgeführt hat, überträgt entsprechende Daten auch an den anderen Prozessor, der vordem der betriebsführende Prozessor war, nachdem jener hierzu mit letzterem erneut in Verbindung tritt.

Wie bereits ausgeführt wurde, sind also nach erfolgter Ladung der betreffenden Speicher der jeweiligen dezentralen Steuereinrichtungen zunächst nur der Anschlußgruppen der zweiten Kategorie sowohl der betreffende zentrale Prozessor, der diese Ladung durchgeführt hat, als auch der bis dahin betriebsführende zentrale Prozessor gleichzeitig an der Abwicklung von Verbindungsherstellungen vorübergehend beteiligt. Nach dieser erfolgten Ladung durch den betreffenden Prozessor werden Verbindungen über das ihm entsprechende Koppelfeld aufgebaut; zugleich werden neue Verbindungen vorübergehend auch noch über das andere Koppelfeld aufgebaut. Sind dann die Steuereinrichtungen der Anschlußgruppen der ersten Kategorie in der oben beschriebenen Weise unzugänglich gemacht worden gegenüber Verbindungsdaten für neue Verbindungen, so werden vorerst weitere neue Verbindungen nur noch über Anschlußgruppen der zweiten Kategorie aufgebaut. Jedoch werden über die Anschlußgruppen der ersten Kategorie bereits im Aufbau befindliche Verbindungen bis zur endgültigen Durchschaltung fertiggestellt. Ferner bleiben Verbindungen, die durchgeschaltet werden oder bereits durchgeschaltet sind, bis zu ihrer Auslösung bestehen. Die Verbindungsauslösung kann außer durch einen der betreffenden beteiligten Teilnehmer auch zeitabhängig nach einer festgelegten Maximaldauer herbeigeführt werden. Hierbei kann die Maximaldauer z.B.gemessen werden von dem Zeitpunkt an, in dem entweder der Vorgang des Ladens beendet oder die Anschlußgruppen der ersten Kategorie unzugänglich gemacht worden sind für Verbindungsherstellungsdaten für neue Verbindungen.

Der Prozessor, durch den die Ladung der Steuereinrichtungen zunächst einer Kategorie, im obigen Beispiel der zweiten Kategorie durchgeführt wurde, schaltet, nachdem die Anschlußgruppen der ersten Kategorie wie oben erwähnt außer Betrieb genommen wurden, nach obiger Ausführungsversion also die Datenverbindungen zu den Steuereinrichtungen dieser Anschlußgruppen durch und führt auch mit diesen die beschriebene Ladung durch und macht dann diese Steuereinrichtungen nach ihrer Ladung wieder zugänglich für Verbindungsherstellungsdaten für neue Verbindungen. Er kann in diesem Zusammenhang auch den ursprünglich betriebsführenden Prozessor in den nicht-betriebsführenden Betriebszustand umschalten. Dies geschieht in einer für den Fachmann üblichen Weise. Der Prozessor, der die Ladung an sämtlichen Anschlußgruppen durchgeführt hat, überträgt dieser Ladung entsprechende neue Informationen und Daten auch an den ursprünglich betriebsführend gewesenen Prozessor, die letzterer speichert.

Wie zuvor ausgeführt wurde, überträgt derjenige Prozessor, der die weiter oben erwähnten Informationen und Daten an sämtliche Anschlußgruppen der zweiten Kategorie abgegeben hat, der also bestimmte Speicher von deren Steuereinrichtungen in entsprechender Weise geladen hat, diese Informationen auch an den ursprünglich betriebsführend gewesenen Prozessor, der dadurch also diese neuen Informationen und Daten durch entsprechende Speicherung zu seinem eigenen Bestand macht. Gemäß einer anderen, besonders bedeutenden Ausführungsversion, die sich von der vorigen Ausführungsversion unterscheidet, wird nach der beschriebenen erfolgten Ladung der Steuereinrichtungen der zweiten Kategorie durch den anderen Prozessor (der also ursprünglich nicht der betriebsführende Prozessor war) und nach der erwähnten Übernahme der bezüglich des Vermittlungsbetriebes betriebsführenden Prozessorfunktion durch diesen anderen Prozessor und nach der im Zusammenhang mit dieser Übernahme erfolgten Sperrung der Steuereinrichtungen der Anschlußgruppen der ersten Kategorie gegenüber Verbindungsherstellungsdaten, die von den betreffenden Konzentratoren an diese Steuereinrichtung abgegeben werden wollen, der Bestand an neuen Informationen und neuen Daten (wie oben erwähnt) von dem anderen Prozessor, der also der ursprünglich nicht-betriebsführende Prozessor war, zuerst an den ursprünglich betriebsführend gewesenen Prozessor - und zwar von jenem nur an diesen! - übertragen; eine Übertragung dieser neuen Informationen und neuen Daten direkt von diesem anderen Prozessor an die Steuereinrichtungen der Anschlußgruppe der ersten Kategorie unterbleibt also in diesem Falle. Hat nun derjenige Prozessor, der ursprünglich der betriebsführende Prozessor war, auf diese Weise die neuen Informationen und Daten empfangen und gespeichert, so steuert er danach zugleich die Steuereinrichtungen sämtlicher Anschlußgruppen der ersten Kategorie an und überträgt ihnen gleichzeitig diese neuen Informationen und neuen Daten. Diese werden in an sich bekannter Weise in entsprechenden Speichern der Steuereinrichtungen der Anschlußgruppen der ersten Kategorie gespeichert.

Gemäß dieser Ausführungsversion wird also der andere Prozessor von der Aufgabe der Ladung der Steuereinrichtungen der Anschlußgruppen der ersten Kategorie mit den neuen Informationen und Daten entlastet. Dadurch, daß diese neuen Informationen und Daten von dem anderen Prozessor direkt an den betriebsführend gewesenen Prozessor übertragen werden, und zwar nach erfolgter Ladung der Steuereinrichtungen der zweiten Kategorie durch den anderen Prozessor und nach der Übernahme der bezüglich des Vermittlungsbetriebes betriebsführenden Prozessorfunktion durch den anderen Prozessor und nach der im Zusammenhang mit dieser Übernahme erfolgten Sperrung der Steuereinrichtungen der Anschlußgruppen der ersten Kategorie gegenüber Verbindungsherstellungsdaten von an diese Anschlußgruppen der ersten Kategorie angeschlossenen Konzentratoren, wird erreicht, daß derjenige zentrale Prozessor, der ursprünglich der betriebsführende Prozessor war, nunmehr die Aufgabe der Weitergabe der neuen Informationen und der neuen Daten an die Steuereinrichtungen der Anschlußgruppen der ersten Kategorie übernimmt und ausführt. Hierzu steuert er diese Steuereinrichtungen zugleich an und überträgt gleichzeitig die neuen Informationen und Daten an diese Steuereinrichtungen.

Während also der andere Prozessor bereits die betriebsführende Funktion zur Abwicklung des Vermittlungsbetriebes übernommen hat, wickelt der eine Prozessor, der ursprünglich der betriebsführende gewesen war, jetzt aber nicht mehr, die Vorgänge der Ladung der Steuereinrichtungen der Anschlußgruppen der ersten Kategorie mit den neuen Informationen und Daten ab. Von besonderer Bedeutung ist hier die Gleichzeitigkeit und die Tatsache, daß der andere Prozessor, der bereits mit den Verbindungsherstellungsvorgängen stark ausgelastet ist, nicht mit diesen Vorgängen der Ladung beschäftigt wird. Ferner kann der genannte eine Prozessor die Ladevorgänge für sämtliche Steuereinrichtungen der Anschlußgruppen der ersten Kategorie gleichzeitig durchführen, weil in ihm die Steuereinrichtungen aller Anschlußgruppen der ersten Kategorie - und nur diese! - speicherungstechnisch als zugänglich vermerkt sind, und er sie deshalb alle zugleich ansteuern kann, was weiter oben im Einzelnen dargelegt wurde.

Die Prozessoren ZW1 und ZW2 haben je einen Speicher 1za bzw. 2za, in welchem die Adressen der momentan für sie hinsichtlich eines Austausches von Informationen und Daten zugänglichen Steuereinrichtungen (GP...) speicherungstechnisch als zugänglich vermerkt sind, z.B. durch Einspeichern der betreffenden Adressen oder durch Versehen der bereits gespeicherten Adressen mit je einem Markierungs-bit. Ferner weisen diese Prozessoren je einen Speicher 1zc bzw. 2zc für die genannten (neuen) Informationen und je einen Speicher 1zd bzw. 2zd für die genannten (neuen) Daten auf, sowie je eine Schreib- und Leseeinrichtung 1zb bzw. 2zb zum Einspeichern (Schreiben) und Ausspeichern (Lesen) dieser Adressen, Markierungs-bits, Informationen und Daten beim Geladenwerden bzw. beim Laden des jeweiligen Partner-Prozessors sowie entsprechender Speicher GR1 bzw. GR2 in den Steuereinrichtungen der Anschlußgruppen LTG1 und LTG2. Die Schreib - und Leseeinrichtungen wirken auch mit bei der Ansteuerung der Anschlußgruppen und ihrer Steuereinrichtungen beim Laden der betreffenden Speicher GR1 und GR2 mit neuen Informationen und Daten. Die genannten Speicher 1zc bzw. 2zc und 1zd bzw. 2zd können auch in entsprechender Weise unterteilt sein zwecks getrennter Aufnahme von Informationen und Daten, im Hinblick auf den beschriebenen Vorgang, daß Informationen und Daten gegen neue Informationen und Daten ausgestauscht werden müssen. Es sind also die neuen Informationen und Daten von den bis dahin für den Vermittlungsbereich verwendete Informationen und Daten gesondert gespeichert.

In der ganzen bisherigen Beschreibung ging es um einen Austausch der Informationen und Daten und um das Laden der Steuereinrichtungen der Anschlußgruppen mit neuen Informationen und Daten. Dieses Laden kann auch über die Steuereinrichtungen hinausgehen, und es ist vorgesehen, daß auch zugleich die Konzentratorprozessoren mit solchen neuen Informationen und Daten geladen werden.

Das durch die zentralen Prozessoren abgewickelte Laden kann erforderlich werden und durchgeführt werden bei beabsichtigten Veränderungen an dem Bestand der vorhandenen Informationen und Daten, ebenso aber auch dann, wenn Fehler aufgetreten sind, die es erforderlich machen, den genannten Bestand auf den neuesten und absolut richtigen Stand zu bringen. Ein solches Laden kann aber auch im Zusammenhang mit einer Austauschung der zentralen Prozessoren selber vorgesehen werden, z.B. wenn ein Prozessor-Paar durch ein Paar von Prozessoren eines anderen Typs, z.B. neueren Typs, zu ersetzen ist. Für diesen Fall ist vorgesehen, daß der andere Prozessor gegen einen ersten Austausch-Prozessor auswechselbar ist, nachdem die weiteren Verbindungsherstellungsvorgänge mit Hilfe der der ersten Kategorie zugehörigen Anschlußgruppen abgewickelt werden und bevor der andere Prozessor die Vorgänge der Ladung mit den Steuereinrichtungen der der zweiten Kategorie angehörigen Anschlußgruppen abwickelt. Außerdem ist vorgesehen, daß der eine Prozessor nach erfolgter Sperrung der Steuereinrichtungen der Anschlußgruppen der ersten Kategorie und vor Erhalt der Ladung mit den genannten neuen Informationen und Daten vom anderen Prozessor auswechselbar ist gegen einen zweiten Austausch-Prozessor. Es ist hierbei auch möglich, den anderen Prozessor schon früher als zuvor angegeben auszuwechseln. Eine Auswechselung besteht in einem Abschalten und Abtrennen der bisherigen Prozessoren mit einem Anschließen an deren Stelle und Einschalten der neuen Prozessoren in den angegebenen zeitlichen Rahmen, also unter den genannten zeitlichen Bedingungen bezüglich der erfindungsgemäßen Funktionsabläufe der einzelnen Schritte der beschriebenen Ladeprozeduren. Beim Auswechseln der zentralen Prozessoren können diese die bisherigen Informationen und Daten gespeichert haben. Dennoch erfolgt nach dem Auswechseln das Laden in der beschriebenen Weise. Dies trifft auch zu, wenn beim Auswechseln der Prozessoren neue Informationen und Daten vorliegen und zu laden sind. Diese können alleine dem genannten anderen Prozessor eingegeben werden, der sie dann im Zuge der beschriebenen Funktionsabläufe auch an den genannten einen Prozessor übergibt.

Das gegenseitige Laden der Prozessoren ZW1 und ZW2 mit neuen Informationen (z.B. lädt der andere Prozessor ZW2 den einen Prozessor ZW1, s.o.!) und Daten, kann über eine Direktverbindung z zwischen den Eingabe-Ausgabe-Prozessoren G1 und G2 der zentralen Prozessoren ZW1 und ZW2 erfolgen. Diese Direktverbindung kann auch nur zeitweilig bereitgestellt sein und ist nur im Bedarfsfall durchgeschaltet.

Es ist auch noch darauf hinzuweisen, daß in den Konzentratorprozessoren ein Programm gespeichert ist, durch welches sie kompatibel sind für die Betriebszustände vor und nach dem Laden. Gegebenenfalls werden die betreffenden Programmspeicher in den Konzentratorprozessoren vorbereitend hierfür mit einem entsprechenden gespeicherten Programm ausgestattet.

## Patentansprüche

1. Verfahren zum Betrieb zentralgesteuerter Fernmeldevermittlungsanlagen, insbesondere PCM-Zeitmultiplex-Fernsprechvermittlungsanlagen, in denen ein der Verbindungsdurchschaltung dienendes zentrales Koppelfeld (K1, K2) samt einem unter anderem dessen Steuerung sowie einer hierfür erforderlichen Schaltkennzeichenverarbeitung dienenden programmgesteuerten zentralen Prozessor ZW1, ZW2) zur Ersatzschaltemöglichkeit (stand-by-Betrieb) zweifach vorgesehen ist, und in denen eine Mehrzahl von dezentralen Anschlußgruppen (LTG1 bis LTGn) mit je einem Teilkoppelfeld (GS1, GS2) zum außenseitigen Anschluß von Verbindungs-und/oder Teilnehmerleitungen (V1, V2) und mit einer dezentralen programmierbaren Steuereinrichtung (GP1, GP2) zur Schaltkennzeichenaufnahme von diesen Leitungen, zur Schaltkennzeichenvorverarbeitung und -weiterleitung an den zentralen Prozessor und zur Schaltkennzeichenaussendung auf diese Leitungen ausgestattet ist, und in denen in jeder dieser Anschlußgruppen das jeweilige Teilkoppelfeld innenseitig über zwei Gruppen von Linkleitungen (L1/1, L1/2; L2/1, L2/2) gruppenweise getrennt an Koppelfeldanschlüsse einerseits des einen und andererseits des anderen der beiden parallel vorgesehenen Koppelfelder (K1, K2) angeschaltet ist, und in denen für einen der obigen Schaltkennzeichenbehandlung dienenden sowie der Übertragung von Programm- und Vermittlungs-Software dienenden Datenaustausch zwischen den Steuereinrichtungen einerseits und dem jeweils betriebsbereiten bzw. betriebsvorbereitenden Prozessor andererseits Datenverbindungen pro Steuereinrichtung von jenem über das ihm zugeordnete Koppelfeld zu den dezentralen Steuereinrichtungen in betriebsbereiten Zustand gebracht bzw. in ihm gehalten werden, und in denen mit Konzentratorprozessoren (a, b) ausgestattete Konzentratoren (C1 bis C5) in ihrer übergeordneten Vermittlungsstelle an die Teilkoppelfelder wenigstens zweier Anschlußgruppen angeschlossen sind, um ihre Verbindungsherstellungsvorgänge über die eine oder die andere Anschlußgruppe abzuwickeln,
**dadurch gekennzeichnet**,
daß die Anschlußgruppen (LTG1 bis LTGn) zwei Kategorien von Anschlußgruppen zugeordnet werden, wobei jeder Konzentrator (C1 bis C5) an eine beliebige Anschlußgruppe einer ersten Kategorie und eine beliebige Anschlußgruppe einer zweiten Kategorie angeschlossen ist,
daß zur Ladung der Steuereinrichtungen (GP1, GP2) mit Programminformationen und/oder mit Anschlußdaten und gegebenenfalls auch der Konzentratorprozessoren (a, b) ebenfalls mit Anschlußdaten
erstens die je zwei Anschaltungen pro Anschlußgruppe einzeln an die beiden Koppelfelder (K1, K2) auf je eine Anschaltung beschränkt werden,
wobei die Anschlußgruppen (z. B. LTG1, LTG3, LTG5...) der ersten Kategorie an ein erstes (z. B. K1) der beiden Koppelfelder (z.B. LTG2, LTG4, LTG 6) und die Anschlußgruppen der zweiten Kategorie an ein zweites (z. B. K2) der beiden Koppelfelder angeschaltet verbleiben,
sowie die Steuereinrichtungen der Anschlußgruppen der ersten - bzw. zweiten - Kategorie über die betreffenden Datenverbindungen mit dem dem ersten - bzw. zweiten - Koppelfeld entsprechenden Prozessor (ZW1, ZW2) verbunden bleiben,
und zweitens die weiteren Verbindungsherstellungsvorgänge weiterhin mit Hilfe der der ersten Kategorie zugehörigen Anschlußgruppen abgewickelt werden, deren Steuereinrichtungen mit dem zur Zeit noch betriebsführenden Prozessor (z. B. ZW1) in Verbindung stehen,
und drittens der andere Prozessor (z. B ZW2) die Vorgänge der Ladung mit den Steuereinrichtungen der der anderen (zum Beispiel zweiten) Kategorie zugehörigen Anschlußgruppen abwickelt,
und daß nach erfolgter Ladung
erstens die betreffenden, also hierdurch geladenen Steuereinrichtungen durch den letztgenannten Prozessor gegenüber den Konzentratorprozessoren zugänglich gemacht werden für eine Übertragung von Verbindungsherstellungsdaten für neue Verbindungen,
und zweitens von da an Verbindungsherstellungsvorgänge für neue Verbindungen auch durch den letztgenannten Prozessor abgewickelt werden.

2. Verfahren nach Anspruch 1,
**dadurch gekennzeichnet,**
daß nach erfolgter Ladung der betreffende Prozessor (z. B. ZW2) und der andere, bis da hin betriebsführende Prozessor (z. B. ZW2) gleichzeitig an der Abwicklung von Verbindungsherstellungen beteiligt sind.

3. Verfahren nach Anspruch 1,
**dadurch gekennzeichnet,**
daß nach erfolgter Ladung durch den betreffenden Prozessor der ursprünglich betriebsführende Prozessor (z. B. ZW1) die Steuereinrichtungen (GS1) der ersten Kategorie (z. B. LTG1, LTG3, LTG5...) unzugänglich macht gegenüber Konzentratorprozessoren (a, b) für Verbindungsherstellungsdaten für neue Verbindungen, z. B. für Verbindungsherstellungsdaten für im Aufbau befindliche Verbindungen, vorzugsweise für Verbindungsherstellungsdaten für neu zu beginnende Verbindungsherstellungsvorgänge.

4. Verfahren nach Anspruch 2,
**dadurch gekennzeichnet,**
daß nach erfolgter Ladung durch den betreffenden Prozessor (z. B. ZW2) Verbindungen über das ihm entsprechende Koppelfeld (K2) aufgebaut werden, und daß zugleich über das andere Koppelfeld (K1) bereits im Aufbau befindliche Verbindungen bis zur endgültigen Durchschaltung fertiggestellt werden, und daß durchgeschaltete Verbindungen bis zu ihrer Auslösung bestehen bleiben.

5. Verfahren nach Anspruch 4,
**dadurch gekennzeichnet,**
daß die Verbindungsauslösung außer durch einen der betreffenden Teilnehmer auch zeitabhängig nach einer festgelegten Maximaldauer herbeigeführt wird, gemessen von dem Zeitpunkt, in dem entweder der Vorgang des Ladens beendet ist oder die Anschlußgruppen der ersten Kategorie unzugänglich gemacht worden sind für Verbindungsherstellungsdaten für neue Verbindungen.

6. Verfahren nach Anspruch 1,
**dadurch gekennzeichnet,**
daß der Prozessor (z. B. ZW2) , durch den die Ladung der Steuereinrichtungen (GP2) zunächst einer, zum Beispiel der zweiten, Kategorie (z.B. LTG2, LTG4, LTG6... ), durchgeführt wurde,
die Datenverbindungen zu den Steuereinrichtungen (GP1) der Anschlußgruppen (z.B. LTG1, LTG3, LTG5...) der anderen Kategorie erneut durchschaltet und auch mit diesen die Ladung durchführt.

7. Verfahren nach Anspruch 6,
**dadurch gekennzeichnet,**
daß der Prozessor (z. B. ZW1), durch den die Ladung der Steuereinrichtungen (GP2) zunächst einer, zum Beispiel zweiten Kategorie (z. B. LTG2, LTG4, LTG6,...) durchgeführt wurde,
die Steuereinrichtungen der Anschlußgruppen (z. B. LTG1, LTG 3, LTG5,...) der anderen Kategorie nach ihrer Ladung zugänglich macht für Verbindungsherstellungsdaten für neue Verbindungen.

8. Verfahren nach Anspruch 1,
**dadurch gekennzeichnet,**
daß der Prozessor (GP 2), durch den die Ladung der Steuereinrichtungen zunächst einer, zum Beispiel der zweiten, Kategorie durchgeführt wurde,
dem anderen Prozessor (GP1) gegenüber die Ladung durchführt.

9. Verfahren nach Anspruch 1,
**dadurch gekennzeichnet,**
daß in den Konzentratorprozessoren (a, b) ein Programm gespeichert wird, durch welches sie kompatibel sind für die Betriebszustände vor und nach dem Laden.

10. Verfahren nach Anspruch 1,
**dadurch gekennzeichnet,**
daß für Verbindungen indiviuell von und/oder zu jeweils einer anderen Vermittlungsstelle belegbare Verbindungsleitungen (V1, V2) bzw. Kanäle entsprechenden Kanalsystemen teils an eine Anschlußgruppe (z. B. LTG1) einer ersten Kategorie und teils an eine Anschlußgruppe (z. B. LTG2) einer zweiten Kategorie angeschlossen sind, vorzugsweise je zur Hälfte.

11. Verfahren nach Anspruch 1,
**dadurch gekennzeichnet**,
daß der eine Prozessor (z. B. ZW1), der zunächst noch betriebsführend geblieben ist,
nach erfolgter Ladung der Steuereinrichtungen (GP2) der Anschlußgruppen der zweiten Kategorie (z.B. LTG2, LTG4, LTG6...), durch den anderen Prozessor (ZW2) und nach Übernahme der bezüglich des Vermittlungsbetriebs betriebsführenden Prozessorfunktion durch den anderen Prozessor
und nach einer im Zusammenhang mit dieser Übernahme erfolgten Sperrung der Steuereinrichtungen (GP1) der Anschlußgruppen (z. B LTG1, LTG3, LTG5,...) der ersten Kategorie gegenüber Verbindungsherstellungsdaten die Ladung mit den genannten neuen Informationen und Daten von dem anderen Prozessor erhält,
daß danach der eine Prozessor die Steuereinrichtungen der Anschlußgruppen der ersten Kategorie mit diesen Informationen und Daten lädt und darauf die Datenverbindungen zu diesen Steuereinrichtungen unterbricht, und
daß danach der andere Prozessor Datenverbindungen zu diesen Steuereinrichtungen durchschaltet und letztere für Verbindungsherstellungsdaten gegenüber den angeschlossenen Konzentratoren wieder entsperrt.

12. Verfahren nach Anspruch 11,
**dadurch gekennzeichnet**,
daß der andere Prozessor (z. B. ZW2) gegen einen ersten Austausch-Prozessor auswechselbar ist, nachdem die weiteren Verbindungsherstellungsvorgänge mit Hilfe der der ersten Kategorie zugehörigen Anschlußgruppen (z. B. LTG1, LTG3, LTG5),...) abgewickelt werden und bevor der andere Prozessor (ZW1) die Vorgänge der Ladung mit den Steuereinrichtungen der der zweiten Kategorie angehörigen Anschlußgruppen (z. B. LTG2, LTG4, LTG6,...) abwickelt.

13. Verfahren nach Anspruch 11,
**dadurch gekennzeichnet**,
daß der eine Prozessor (z. B. ZW1) nach erfolgter Sperrung der Steuereinrichtungen (GP1) der Anschlußgruppen (z. B. LTG1, LTG3, LTG5,...) der ersten Kategorie und vor Erhalt der Ladung mit den genannten neuen Informationen und Daten vom anderen Prozessor (ZW 2) auswechselbar ist gegen einen zweiten Austausch-Prozessor).

## Claims

1. Method for operating centrally controlled telecommunication exchanges, preferably PCM time-division multiplex telephone exchanges, in which a central switching network (K1, K2) serving to switch through connections is provided in duplicate for the standby substitution possibility (standby mode) together with a program-controlled central processor (ZW1, ZW2) serving inter alia for the control thereof as well as for the processing of switching signals necessary for this purpose, and in which a plurality of decentralized line/trunk groups (LTG1 to LTGn) are equipped in each case with a sub-switching network (GS1, GS2) for the external connection of interexchange trunk and/or subscriber lines (V1, V2) and with a decentralized programmable control device (GP1, GP2) for receiving switching signals from said lines, for preprocessing and forwarding switching signals to the central processor, and for transmitting switching signals on said lines, and in which in each of said line/trunk groups the respective subswitching network is connected internally, separated by groups, to switching network terminals on the one hand of the one, and on the other hand of the other, of the two switching networks (K1, K2) provided in parallel via two groups of link lines (L1/1, L1/2; L2/1, L2/2), and in which for a data exchange serving for the abovementioned switching signal handling and also the transmission of program and switching software between the control devices on the one hand and the respective operational or operation-preparing processor on the other hand, data connections for each control device from said processor via its assigned switching network to the decentralized control devices are brought into the operational state or are held therein, and in which concentrators (C1 to C5) equipped with concentrator processors (a, b) are connected in their superordinate exchange to the subswitching networks of at least two line/trunk gross in order to execute their connection establishment operations via the one or the other line/trunk group, characterized
in that the line/trunk groups (LTG1 to LTGn) are assigned to two categories of line/trunk groups, each concentrator (C1 to C5) being connected to any line/trunk group of a first category and any line/trunk group of a second category,
in that for loading the control devices (GP1, GP2) with program information and/or with connection data, and if necessary also the concentrator processors (a, b) likewise with connection data,
firstly the two connections per line/trunk group in each case are restricted to one connection in each case individually to the two switching networks (K1, K2),
in which the line/trunk groups (e.g. LTG1, LTG3, LTG5 ...) of the first category remain connected to a first (e.g. K1) of the two switching networks (e.g. LTG2, LTG4, LTG6) and the line/trunk groups of the second category remain connected to a second (e.g. K2) of the two switching networks, and also the control devices of the line/trunk groups of the first - or second respectively - category remain connected via the respective data connections to the processor (ZW1, ZW2) corresponding to the first - or second respectively - switching network,
and secondly the further connection establishment operations continue to be executed with the aid of the line/trunk groups associated with the first category, the control devices of which are connected to the currently still operation-controlling processor (e.g. ZW1),
and thirdly the other processor (e.g. ZW2) executes the loading operations with the control devices of the line/trunk groups associated with the other (for example second) category,
and in that after loading has been completed,
firstly the last-mentioned processor makes the respective control devices, that is to say the ones loaded as a result, accessible to the concentrator processors for a transmission of connection establishment data for new connections,
and secondly from then on connection establishment operations for new connections are also executed by the last-mentioned processor.

2. Method according to Claim 1, characterized in that after loading has been completed, the respective processor (e.g. ZW2) and the other, until then operation-controlling, processor (e.g. ZW2) simultaneously participate in the execution of connection establishments.

3. Method according to Claim 1, characterized in that after loading by the respective processor has been completed, the original operation-controlling processor (e.g. ZW1) makes the control devices (GS1) of the first category (e.g. LTG1, LTG3, LTG5 ...) inaccessible to concentrator processors (a, b) for connection establishment data for new connections, for example for connection establishment data for connections in the process of being established, preferably for connection establishment data for connection establishment operations to be newly started.

4. Method according to Claim 2, characterized in that after loading by the respective processor (e.g. ZW2) has been completed, connections are established via the switching network (K2) corresponding to it, and in that at the same time connections already in the process of being established via the other switching network (K1) are completed up to the final switching through, and in that through-switched connections continue to exist until they are released.

5. Method according to Claim 4, characterized in that, besides by one of the respective subscribers, the connection release can also be initiated depending on time in accordance with a defined maximum duration, measured from the time at which either the loading operation has been completed or the line/trunk groups of the first category have been rendered inaccessible for connection establishment data for new connections.

6. Method according to Claim 1, characterized in that the processor (e.g. ZW2) by means of which the loading of the control devices (GP2) of initially one, for example the second, category (e.g. LTG2, LTG4, LTG6 ...) was carried out, switches through the data connections to the control devices (GP1) of the line/trunk groups (e.g. LTG1, LTG3, LTG5 ...) of the other category again and also carries out the loading with the latter.

7. Method according to Claim 6, characterized in that the processor (e.g. ZW1) by means of which the loading of the control devices (GP2) of initially one, for example the second, category (e.g. LTG2, LTG4, LTG6, ...) was carried out, makes the control devices of the line/trunk groups (e.g. LTG1, LTG3, LTG5, ...) of the other category accessible after their loading for connection establishment data for new connections.

8. Method according to Claim 1, characterized in that the processor (GP2) by means of which the loading of the control devices of initially one, for example the second, category was carried out, carries out the loading with respect to the other processor (GP1).

9. Method according to Claim 1, characterized in that a program is stored in the concentrator processors (a, b), by means of which they are compatible for the operating states before and after the loading.

10. Method according to Claim 1, characterized in that, for connections, interexchange trunk lines (V1, V2), or channel systems corresponding to channels respectively, that can be individually occupied from and/or to another exchange in each case are connected in part to a line/trunk group (e.g. LTG1) of a first category and in part to a line/trunk group (e.g. LTG2) of a second category, preferably half each in each case.

11. Method according to Claim 1, characterized in that the one processor (e.g. ZW1) which has initially remained operation-controlling, after the loading of the control devices (GP2) of the line/trunk groups of the second category (e.g. LTG2, LTG4, LTG6 ...) by the other processor (ZW2) has been completed, and after the operation-controlling processor function with respect to the switching operation has been taken over by the other processor, and after the control devices (GP1) of the line/trunk groups (e.g. LTG1, LTG3, LTG5, ...) of the first category have been blocked for connection establishment data in connection with said takeover, receives the loading with the aforesaid new information and data from the other processor, in that following this the one processor loads the control devices of the line/trunk groups of the first category with said information and data, and then interrupts the data connections to said control devices, and in that after that the other processor switches through data connections to said control devices and releases the latter for connection establishment data for the connected concentrators again.

12. Method according to Claim 11, characterized in that the other processor (e.g. ZW2) can be exchanged for a first substitute processor once the further connection establishment operations have been executed with the aid of the line/trunk groups (e.g. LTG1, LTG3, LTG5, ...) associated with the first category and before the other processor (ZW1) executes the loading operations with the control devices of the line/trunk groups (e.g. LTG2, LTG4, LTG6, ...) associated with the second category.

13. Method according to Claim 11, characterized in that after the control devices (GP1) of the line/trunk groups (e.g. LTG1, LTG3, LTG5, ...) of the first category have been blocked and before receiving the load with the aforesaid new information and data from the other processor (ZW2), the one processor (e.g. ZW1) can be exchanged for a second substitute processor.

## Revendications

1. Procédé d'exploitation d'installations de commutation de télécommunication à commande centrale, notamment d'installations de commutation téléphonique MIC à multiplexage temporel, dans lesquelles un champ de couplage central (K1,K2) utilisé pour l'interconnexion de liaisons, ainsi qu'un processeur central (ZW1, ZW2), commandé par programme et utilisé notamment pour la commande du champ de couplage ainsi pour le traitement de signaux caractéristiques de commutation nécessaires à cet effet, est prévu en double pour une possibilité de branchement à titre de remplacement (fonctionnement en stand-by), et dans lesquelles une multiplicité de groupes de raccordement décentralisés (LTG1 à LTGn) sont équipés chacun d'un champ de couplage partiel (GS1, GS2) pour le raccordement, côté extérieur, de lignes de jonction et/ou de lignes d'abonnés (V1, V2), et d'un dispositif de commande décentralisé programmable (GP1, GP2) servant à recevoir des signaux caractéristiques de commutation de ces lignes, à réaliser le prétraitement des signaux caractéristiques de commutation et à retransmettre ces signaux au processeur central et à envoyer des signaux caractéristiques de commutation dans ces lignes, et dans lesquelles, dans chacun de ces groupes de raccordement, le champ de couplage partiel respectif est raccordé, côté intérieur, par l'intermédiaire de deux groupes de lignes de raccordement (L1/1, L1/2; L2/1, L2/2), par groupes, séparément à des bornes, d'une part, du premier et, d'autre part, de l'autre des deux champs de couplage (K1, K2) prévus en parallèle, et dans lesquelles pour un échange de données, qui est utilisé pour le traitement indiqué plus haut des signaux caractéristiques de commutation et est utilisé pour la transmission d'un logiciel de programme et d'un logiciel de commutation, entre, d'une part, les dispositifs de commande, et, d'autre part, le processeur respectivement prêt à fonctionner ou se préparant pour le fonctionnement, des liaisons de transmission de données sont amenées ou maintenues dans l'état prêt à fonctionner pour chaque dispositif de commande, depuis ce dispositif de commande, par l'intermédiaire du champ de couplage qui lui est associé, jusqu'aux dispositifs de commande décentralisés, et dans lesquelles des concentrateurs (C1 à C5), équipés de processeurs (a, b), sont raccordés, dans leur central de rang supérieur, aux champs de couplage partiel d'au moins deux groupes de raccordement, afin d'exécuter leurs opérations d'établissement de liaisons par l'intermédiaire de l'un ou de l'autre des groupes de raccordement,
caractérisé par le fait
que les groupes de raccordement (LTG1 à LTGn) sont associés à deux catégories de groupes de raccordement, chaque concentrateur (C1 à C5) étant raccordé à un groupe de raccordement quelconque d'une première catégorie et à un groupe de raccordement quelconque d'une seconde catégorie, que pour le chargement des dispositifs de commande (GP1, GP2) avec des informations de programme et/ou avec des données de raccordement et éventuellement également le chargement des processeurs (a, b) des concentrateurs et également avec des données de raccordement
d'une part, les deux raccordements respectifs pour chaque groupe de raccordement individuellement aux deux champs de couplage (K1, K2) sont limités à respectivement un raccordement,
les modules de raccordement (par exemple LTG1, LTG3, LTG5...) de la première catégorie restant raccordés à un premier (par exemple K1) des deux champs de couplage (par exemple LTG2, LTG4, LTG6) et les groupes de raccordement de la seconde catégorie restant raccordés à un second (par exemple K2) des deux champs de couplage, et
les dispositifs de commande des groupes de raccordement de la première - ou de la seconde - catégorie restant reliés, par l'intermédiaire des liaisons concernées de transmission de données, au processeur (ZW1, ZW2), qui correspond au premier - ou au second - champ de couplage,
et, en second lieu, les seconds processus d'établissement de liaisons se déroulent, en outre, à l'aide des groupes de raccordement associés à la première catégorie et dont les dispositifs de commande sont reliés au processeur (par exemple ZW1) qui encore actuellement dirige le fonctionnement, et
en troisième lieu, l'autre processeur (par exemple ZW2) exécute les opérations de chargement avec le dispositif de commande des groupes de raccordement associés à l'autre catégorie (par exemple la seconde catégorie), et
qu'une fois réalisé le chargement,
tout d'abord les dispositifs de commande concernés, c'est-à-dire qui sont de ce fait chargés, sont rendus accessibles aux processeurs des concentrateurs, par l'intermédiaire du processeur indiqué en dernier lieu, pour une transmission de données et d'établissement de liaisons pour de nouvelles liaisons, et
en second lieu, à partir de là, des processus d'établissement de liaisons pour de nouvelles liaisons sont également exécutés par le processeur indiqué en dernier lieu.

2. Procédé suivant la revendication 1, caractérisé par le fait qu'une fois le chargement réaliser, le processeur concerné (par exemple ZW2) et l'autre processeur (par exemple ZW2), qui jusque-là avait la commande des opérations, participent simultanément à l'exécution d'établissements de liaisons.

3. Procédé suivant la revendication 1, caractérisé par le fait qu'une fois réalisé le chargement par le processeur concerné, le processeur (par exemple ZW1), qui avait initialement la conduite des opérations, rend les dispositifs de commande (GS1) de la première catégorie (par exemple LTG1, LTG3, LTG5 ...) inaccessibles aux processeurs (a, b) des concentrateurs pour des données d'établissement de nouvelles liaisons, par exemple pour des données d'établissement de liaisons pour des liaisons en cours d'établissement, de préférence pour des données d'établissement de liaisons pour de nouveaux processus d'établissement de liaisons devant commencer.

4. Procédé suivant la revendication 2, caractérisé par le fait qu'une fois réalisé le chargement par le processeur concerné (par exemple ZW2), des liaisons sont établies par l'intermédiaire du champ de couplage (K2) correspondant à ce processeur, et que simultanément des liaisons déjà en cours d'établissement sont achevées jusqu'à l'interconnexion finale, par l'intermédiaire de l'autre champ de couplage (K1) et que des liaisons interconnectées subsistent jusqu'à leur suppression.

5. Procédé suivant la revendication 4, caractérisé par le fait que la suppression de la liaison est exécutée non seulement par l'un des abonnés concernés, mais également, en fonction du temps, au bout d'une durée maximale fixée, mesurée à partir de l'instant où soit le processus de chargement est interrompu, ou à partir de l'instant où les groupes de raccordement de la première catégorie ont été rendus inaccessibles pour des données d'établissement pour de nouvelles liaisons.

6. Procédé suivant la revendication 1, caractérisé par le fait que le processeur (par exemple ZW2), au moyen duquel a été exécuté le chargement des dispositifs de commande (GP2) appartenant tout d'abord à une catégorie, par exemple la seconde catégorie (par exemple LTG2, LTG4, LTG6, ...),
interconnecte à nouveau les liaisons de transmission de données aux dispositifs de commande (GP1) des groupes de raccordement (par exemple LTG1, LTG3, LTG5 ...) de l'autre catégorie et exécute également le chargement avec ces derniers.

7. Procédé suivant la revendication 6, caractérisé par le fait
que le processeur (par exemple ZW1), au moyen duquel a été exécuté le chargement des dispositifs de commande (GP2) faisant partie tout d'abord d'une catégorie, par exemple la seconde catégorie (par exemple LTG2, LTG4, LTG6, ...), rend accessible les dispositifs de commande des groupes de raccordement (par exemple LTG1, LTG3, LTG5...) de l'autre catégorie, après leur chargement, pour des données d'établissement de nouvelles liaisons.

8. Procédé suivant la revendication 1, caractérisé par le fait que le processeur (GP2), au moyen duquel a été exécuté le chargement des dispositifs de commande faisant partie tout d'abord d'une catégorie, par exemple la seconde catégorie,
exécute le chargement à la place de l'autre processeur (GP1).

9. Procédé suivant la revendication 1, caractérisé par le fait que dans les processeurs (a, b) des concentrateurs est mémorisé un programme, grâce auquel ces processeurs sont compatibles pour les états de fonctionnement avant et après le chargement.

10. Procédé suivant la revendication 1, caractérisé par le fait que des lignes de jonction (V1, V2) ou des canaux, qui peuvent être occupés pour des liaisons qui individuellement arrivent de et/ou partent vers respectivement un autre central, sont raccordés en partie à un groupe de raccordement (par exemple LTG1) d'une première catégorie et en partie à un groupe de raccordement (par exemple LTG2) d'une seconde catégorie, de préférence pour moitié.

11. Procédé suivant la revendication 1, caractérisé par le fait
qu'une fois exécuté le chargement des dispositifs de commande (GB2) des groupes de raccordement de la seconde catégorie (par exemple LTG2, LTG4, LTG6...), par l'autre processeur (ZW2) et après la prise en charge de la fonction du processeur qui dirige le fonctionnement pour l'opération de commutation, par l'autre processeur, et
après un blocage, exécuté en liaison avec cette prise en charge, des dispositifs de commande (GP) du groupe de raccordement (par exemple LTG1, LTG3, LTG5, ...) de la première catégorie par rapport aux données d'établissement de liaison, un processeur (par exemple ZW1), qui est tout d'abord encore resté à la direction des opérations, reçoit le chargement avec lesdites nouvelles informations et données de l'autre processeur,
qu'ensuite le premier processeur charge les dispositifs de commande des groupes de raccordement de la première catégorie avec ces informations et données et ensuite interrompt les liaisons de transmission de données avec ces dispositifs de commande, et
qu'ensuite l'autre processeur interconnecte des liaisons de transmission de données avec ces dispositifs de commande et bloque à nouveau ces derniers pour des données d'établissement de liaisons vis-à-vis des concentrateurs raccordés.

12. Procédé suivant la revendication 11, caractérisé par le fait que l'autre processeur (par exemple ZW2) peut être remplacé par un premier processeur de remplacement, une fois que les autres processus d'établissement de liaisons ont été exécutés à l'aide des groupes de raccordement (par exemple LTG1, LTG3, LTG5, ...), associés à la première catégorie, et avant que l'autre processeur (ZW1) exécute les opérations de chargement avec les dispositifs de commande des groupes de raccordement (par exemple LTG2, LTG4, LTG6, ...), associés à la seconde catégorie.

13. Procédé suivant la revendication 11, caractérisé par le fait qu'une fois réalisé le blocage des dispositifs de commande (GP1) des groupes de raccordement (par exemple LTG1, LTG3, LTG5, ...) de la première catégorie et avant la réception de la charge avec lesdites nouvelles informations et données de la part de l'autre processeur (ZW2), le premier processeur (par exemple ZW1) peut être remplacé par un second processeur de remplacement.
